# EUROPÄISCHE PATENTANMELDUNG

(11) **EP 1 942 684 A1**
(43) Veröffentlichungstag der Anmeldung: **09.07.2008**
(21) Anmeldenummer: 07000286.0
(22) Anmeldetag: 08.01.2007
(51) Int. Cl.: H04Q 7/22

(54) **Verfahren und Vorrichtung für die Kurznachrichten-Zustellung über IMS**

(71) Anmelder: Siemens Networks GmbH & Co. KG, 81541 München (DE)
(72) Erfinder: Die Erfindernennung liegt noch nicht vor
(74) Vertreter: Maier, Daniel Oliver

(57) **Zusammenfassung**

Die Erfindung betrifft ein Verfahren zur Kurznachrichtenzustellung,
gemäß welchem bei Registrierung eines IP-SM-GW im HSS das HSS prüft, ob wartende Nachrichtendaten vorhanden sind,
wobei in diesem Fall ein oder mehrere Kurznachrichtenzentren alarmiert werden, und das HSS (oder HLR) die IMSI des Teilnehmers in der Nachricht "AnyTimeModification ack" zum IP-SM-GW sendet,
und dieses dann mit Hilfe der IMSI die eintreffende Kurznachricht dem Teilnehmer zuordnet.

## Beschreibung

In Telekommunikationsnetzen (insbesondere Mobilfunknetzen basierend auf dem 3GPP UMTS Standard) werden Kurz-Nachrichten (short messages) von einem Short Message Service Centre (SMSC) über verschiedene Wege dem Teilnehmer zugestellt: 1. über ein MSC (CS-domain); 2. über ein SGSN (PS-domain). Ein dritter Weg über einen generischen 3GPP IP Access (IMS) wird in in der Technischen Spezifikation 3GPP TS 23.204 beschrieben (aktuelle Version ist 7.0.0). Das in dieser Spezifikation beschriebene Verfahren der Zustellung von Kurznachrichten ist jedoch teilweise umständlich und unvollständig. Diese Erfindung schlägt eine Vereinfachung und Vervollständigung des Verfahrens der Kurz-Nachrichten Zustellung über den dritten Weg (IMS) vor.

Der bisher bekannte Stand der Technik wird in 3GPP TS 23.204 Version 7.0.0 beschrieben und sieht NICHT vor, dass mit der Registrierung des IP-SM-GW im HSS (genauer HLR) geprüft wird, ob message waiting data vorhanden sind und in diesem Fall eine Alarmierung der SMSCs angestoßen wird.

Der bisher bekannte Stand der Technik sieht vor, dass das HSS die Nachricht SendRoutingInfoForSM vom SMS-GMSC zum IP-SM-GW weiterleitet (siehe Kapitel 5.3.2). Die Funktionalität im IP-SM-GW ist ähnlich der in 3GPP TR 23.840 beschriebenen komplizierten Funktion, die nach Empfang der vomHSS weitergeleiteten Nachricht SendRoutingInfoForSM die Vergabe einer Korrelierungsnummer vorsieht, mit der der Teilnehmer letztlich identifiziert wird.

Der bisher bekannte Stand der Technik sieht NICHT vor, wie bei nicht erfolgreicher Zustellung einer Kurznachricht über das IMS dieser Weg automatisch deaktiviert wird und eine Zustellung über MSC oder SGSN (falls möglich) automatisch angestoßen wird.

Der bisher bekannte Stand der Technik sieht NICHT vor, wie eine Wiedererreichbarkeit über das IMS automatisch festgestellt werden kann und zur Reaktivierung dieses Weges führt.

Aufgabe der vorliegenden Erfindung ist eine Optimierung der Kurznachrichtenzustellung. Die Aufgabe wird jeweils durch die Gegenstände der unabhängigen Ansprüche gelöst.

Erfindungsgemäß prüft bei Registrierung eines IP-SM-GW im HSS das HSS, ob message waiting data vorhanden sind. Ist dies der Fall, so werden die Short Message Service Centre alarmiert. Das HSS (genauer HLR) sendet die IMSI des Teilnehmers in der Nachricht AnyTimeModification ack zum IP-SM-GW. Dieses kann dann mit Hilfe der IMSI die eintreffende Kurznachricht dem Teilnehmer zuordnen ohne dass eine Korrelierungsnummer vergeben werden muss. Nach nicht erfolgreicher Zustellung der Kurznachricht über das IMS (Empfang der Nachricht ReportSM-DeliveryStatus) markiert das HSS (genauer HLR) die Adresse des IP-SM-GW als nicht erreichbar (Mobile Not Reachable via IMS) und sendet (falls der Teilnehmer über MSC oder SGSN erreichbar ist) die Nachricht AlertServiceCentre zum SMS-GMSC - damit wird die Zustellung der Kurznachricht über MSC oder SGSN angestoßen. Ferner aktiviert das IP-SM-GW dynamische Filter-Kriterien, so dass eine Wiedererreichbarkeit des Teilnehmers über das IMS überwacht wird. Nach Feststellen der Wiedererreichbarkeit des Teilnehmers über das IMS mittels der aktivierten dynamischen Filter-Kriterien sendet das IP-SM-GW die Nachricht ReadyForSM zum HSS (genauer HLR). Diese Nachricht beinhaltet erfindungsgemäß einen Aktivierungsindikator, der bewirkt, dass die im HLR noch gespeicherte aber als nicht erreichbar markierte IP-SM-GW Adresse wieder als erreichbar markiert wird. Ferner deaktiviert das IP-SM-GW die dynamischen Filter-Kriterien.

Von Vorteil ist, dass wartende Short Message Service Centre alarmiert werden um mit der Zustellung von Kurznachrichten zu beginnen, wenn sich ein IP-SM-GW im HSS registriert.

Von Vorteil ist, dass aufgrund der in der Nachricht AnyTimeModification ack übertragenen IMSI keine Korrelierungsnummer vom IP-SM-GW vergeben werden muss, dass die Nachricht SendRoutingInfoForSM nicht vom HLR zum IP-SM-GW weitergeleitet werden muss und dass das IP-SM-GW selbst nicht die Nachricht SendRoutingInfoForSM zum HLR senden muss.

Von Vorteil ist, dass nach nicht erfolgreicher Zustellung einer Kurznachricht über das IMS der existierende automatische Wiederholungsmechanismus im SMS-GMSC genutzt wird, um die Kurznachricht über MSC oder SGSN zuzustellen; ferner, dass nach nicht erfolgreicher Zustellung der Kurznachricht über das IMS dieser Weg automatisch deaktiviert wird bis der Teilnehmer wieder über das IMS erreichbar ist.

Von Vorteil ist, dass aufgrund des in der Nachricht ReadyForSM übertragenen Aktivierungsindikators die Zustellung von Kurznachrichten über da IMS automatisch reaktiviert werden kann.

## Patentansprüche

1. Verfahren zur Kurznachrichtenzustellung,
**dadurch gekennzeichnet, dass**
bei Registrierung eines IP-SM-GW im HSS das HSS prüft, ob wartende Nachrichtendaten (="message waiting data") vorhanden sind,
wobei in diesem Fall ein oder mehrere Kurznachrichtenzentren (="Short Message Service Centres") alarmiert werden, und das HSS (oder HLR) die IMSI des Teilnehmers in der Nachricht "AnyTimeModification ack" zum IP-SM-GW sendet,
und dieses dann mit Hilfe der IMSI die eintreffende Kurznachricht dem Teilnehmer zuordnet.

2. Verfahren nach Anspruch 1,
**dadurch gekennzeichnet, dass** mit Hilfe der IMSI die eintreffende Kurznachricht dem Teilnehmer zugeordnet wird, ohne dass eine Korrelierungsnummer vergeben werden muss.

3. Verfahren nach einem der vorhergehenden Ansprüche,
**dadurch gekennzeichnet, dass**
nach nicht erfolgreicher Zustellung der Kurznachricht über das IMS (Empfang der Nachricht ReportSM-DeliveryStatus) das HSS (genauer HLR) die Adresse des IP-SM-GW als nicht erreichbar markiert (Mobile Not Reachable via IMS) und (falls der Teilnehmer über MSC oder SGSN erreichbar ist) die Nachricht AlertServiceCentre zum SMS-GMSC sendet, damit die Zustellung der Kurznachricht über MSC oder SGSN angestoßen wird.

4. Verfahren nach Anspruch 3,
**dadurch gekennzeichnet, dass**
das IP-SM-GW dynamische Filter-Kriterien aktiviert, so dass eine Wiedererreichbarkeit des Teilnehmers über das IMS überwacht wird.

5. Verfahren nach einem der vorhergehenden Ansprüche,
**dadurch gekennzeichnet, dass**
nach Feststellen der Wiedererreichbarkeit des Teilnehmers über das IMS mittels der aktivierten dynamischen Filter-Kriterien das IP-SM-GW die Nachricht ReadyForSM zum HSS (insbesondere HLR) sendet.

6. Verfahren nach Anspruch 5,
**dadurch gekennzeichnet, dass**
diese Nachricht einen Aktivierungsindikator beinhaltet, der bewirkt, dass die im HLR noch gespeicherte aber als nicht erreichbar markierte IP-SM-GW Adresse wieder als erreichbar markiert wird und dass das IP-SM-GW die dynamischen Filter-Kriterien deaktiviert.

7. Verfahren nach einem der vorhergehenden Ansprüche,
**dadurch gekennzeichnet, dass**
wartende Short Message Service Centre alarmiert werden um mit der Zustellung von Kurznachrichten zu beginnen, wenn sich ein IP-SM-GW im HSS registriert.

8. Verfahren nach einem der vorhergehenden Ansprüche,
**dadurch gekennzeichnet, dass**
dass aufgrund der in der Nachricht AnyTimeModification ack übertragenen IMSI keine Korrelierungsnummer vom IP-SM-GW vergeben wird, dass die Nachricht SendRoutingInfoForSM nicht vom HLR zum IP-SM-GW weitergeleitet wird und dass das IP-SM-GW selbst nicht die Nachricht SendRoutingInfoForSM zum HLR sendet.

9. Verfahren nach einem der vorhergehenden Ansprüche,
**dadurch gekennzeichnet, dass**
nach nicht erfolgreicher Zustellung einer Kurznachricht über das IMS der existierende automatische Wiederholungsmechanismus im SMS-GMSC genutzt wird, um die Kurznachricht über MSC oder SGSN zuzustellen, und dass nach nicht erfolgreicher Zustellung der Kurznachricht über das IMS dieser Weg automatisch deaktiviert wird bis der Teilnehmer wieder über das IMS erreichbar ist.

10. Verfahren nach einem der vorhergehenden Ansprüche,
**dadurch gekennzeichnet, dass**
mit Hilfe des in der Nachricht ReadyForSM übertragenen Aktivierungsindikators die Zustellung von Kurznachrichten über da IMS automatisch reaktiviert wird.

11. Vorrichtung zur Durchführung des Verfahrens nach einem der vorhergehenden Ansprüche.
